# EUROPEAN PATENT APPLICATION

(11) **EP 4 779 725 A1**
(43) Date of publication of application: **22.07.2026**
(21) Application number: 26150596.0
(22) Date of filing: 07.01.2026
(51) Int. Cl.: H01M 4/66, H01M 4/75, H01M 10/0562

(54) **NEGATIVE ELECTRODE, SOLID-STATE BATTERY, AND SOLID-STATE BATTERY FABRICATION METHOD**

(30) Priority: 20.01.2025 JP 2025008050
(71) Applicant: Toyota Jidosha Kabushiki Kaisha, Toyota-shi, Aichi-ken 471-8571 (JP)
(72) Inventor: MATSUYAMA, Takuya, Toyota-shi, Aichi-ken, 471-8571 (JP)
(74) Representative: Winter, Brandl - Partnerschaft mbB

(57) **Abstract**

In the negative electrode, a negative electrode current collector, a metal foil, and a negative electrode active material layer are layered in this order.

## Description

### TECHNICAL FIELD

The present disclosure relates to a negative electrode, a solid-state battery, and a solid-state battery fabrication method.

### BACKGROUND ART

Recently, demand for rechargeable batteries has been rising and, as well as rechargeable batteries provided with liquid electrolytes, development of solid-state batteries that employ solid-state electrolytes has been progressing. An all-solid-state battery, which is an example of a solid-state battery, includes a solid-state electrolyte layer instead of a liquid electrolyte. Because the all-solid-state battery does not use a flammable organic solvent, a stable device may be simplified, and the all-solid-state battery is excellent in fabrication costs and productivity.

Japanese Patent Application Laid-Open (JP-A) No. 2020-119696 discloses a rechargeable battery provided with an electrode body that is structured by positive electrodes and negative electrodes being alternatingly stacked with one another, with a solid-state electrolyte interposed. At least a portion of the electrode body includes a material containing sulfur. In Japanese Patent Application Laid-Open (JP-A) No. 2020-119696, the negative electrode is provided with a negative electrode current collector that is formed of aluminium and a negative electrode active material layer that is formed on at least one surface of the negative electrode current collector. A plating layer formed of nickel and/or chromium is formed on the surface of the negative electrode current collector at which the negative electrode active material layer is to be formed. A negative electrode current collector uncoated portion that does not have either the plating layer or the negative electrode active material layer is formed at an end portion of the negative electrode current collector. An external connection terminal formed of aluminium is joined to the negative electrode current collector uncoated portion.

According to the rechargeable battery disclosed in Japanese Patent Application Laid-Open (JP-A) No. 2020-119696, the plating layer, which is formed of a metal element that is resistant to reaction with sulfur components contained in the electrolyte, is disposed in a region of the negative electrode current collector in which the negative electrode active material layer is formed. Thus, aluminium may be employed for the negative electrode current collector instead of copper.

### SUMMARY OF INVENTION

### TECHNICAL PROBLEM

However, microscopic pinholes may form in the plating layer disposed between the negative electrode current collector and the negative electrode active material layer. Lithium ions contained in the negative electrode active material layer may come into contact with a metal such as aluminium or the like contained in the negative electrode current collector via these pinholes, the metal may alloy with the lithium, and battery characteristics may deteriorate. Accordingly, an object of an embodiment of the present disclosure is to provide a negative electrode, a solid-state battery and a solid-state battery fabrication method that may prevent a metal constituting a negative electrode current collector from alloying with lithium.

### SOLUTION TO PROBLEM

To achieve the object described above, the present disclosure encompasses the following aspects.
<1> A negative electrode comprising: a negative electrode current collector; a metal foil; and a negative electrode active material layer, wherein the negative electrode current collector, the metal foil and the negative electrode active material layer are layered in this order.
<2> The negative electrode according to <1>, wherein the metal foil is a foil of a metal having an oxidation/reduction potential that is higher than a potential at the negative electrode.
<3> The negative electrode according to <1> or <2>, wherein the metal foil is a nickel foil.
<4> The negative electrode according to any one of <1> to <3>, wherein: the negative electrode current collector comprises a negative electrode current collector tab side end portion to be connected with a negative electrode current collector tab, and an end portion of the negative electrode current collector, which is at an opposite side from the negative electrode current collector tab side end portion of the negative electrode current collector, is disposed at an inner side relative to an end portion of the metal foil.
<5> The negative electrode according to any one of <1> to <4>, wherein the metal foil is layered on the negative electrode active material layer without an adhesion layer therebetween.
<6> A solid-state battery comprising: the negative electrode of any one of <1> to <5>; a solid-state electrolyte layer disposed contacting the negative electrode active material layer of the negative electrode; and a positive electrode disposed opposing the negative electrode via the solid-state electrolyte layer, and comprising a positive electrode current collector and a positive electrode active material layer disposed on at least one principal surface of the positive electrode current collector.
<7> The solid-state battery according to <6>, wherein the positive electrode is provided with the positive electrode active material layer disposed on both of the principal surfaces of the positive electrode current collector, and wherein a layered body is provided in which the solid-state electrolyte layer and the negative electrode are respectively layered on each of the positive electrode active material layers, and the negative electrode current collectors of the negative electrodes are outermost layers.
<8> The solid-state battery according to <6> or <7>, wherein a plurality of the layered bodies are provided, and the layered bodies that are adjacent are layered via a single one of the negative electrode current collectors, one of the adjacent layered bodies comprises one of the negative electrodes, in which the metal foil and the negative electrode active material layer are layered on the one principal surface of the negative electrode current collector, and the other of the adjacent layered bodies comprises another of the negative electrodes, in which the metal foil and the negative electrode active material layer are layered on another of the principal surfaces of the negative electrode current collector.
<9> A method for producing a solid-state battery comprising a negative electrode comprising a negative electrode active material layer, a positive electrode comprising a positive electrode active material layer, and a solid-state electrolyte layer disposed between the negative electrode and the positive electrode, the method comprising preparing the negative electrode of any one of <1> to <5> by stacking the negative electrode current collector with the metal foil.
<10> The method for producing a solid-state battery according to <9>, wherein the negative electrode current collector and the metal foil are stacked so that an end portion of the negative electrode current collector, which is at an opposite side from a negative electrode current collector tab side end portion to be connected with a negative electrode current collector tab, is disposed at an inner side relative to an end portion of the metal foil.
<11> The method for producing a solid-state battery according to <9> or <10>, further comprising cutting an end portion of the negative electrode current collector, which is at an opposite side from the negative electrode current collector tab side end portion to be connected with a negative electrode current collector and an end portion of the metal foil after the stacking the negative electrode current collector with the metal foil.
<12> The method for producing a solid-state battery according to any one of <9> to <11>, further comprising applying a negative electrode slurry comprising a negative electrode active material to a surface at an opposite side from the metal foil from a surface thereof that is stacked with the negative electrode current collector.
<13> The method for producing a solid-state battery according to any one of <9> to <11>, wherein, by stacking the metal foil respectively on both of principal surfaces of the negative electrode current collector, the negative electrode comprising the metal foil and the negative electrode active material layer in this order on both the principal surfaces of a single one of the negative electrode current collectors, is prepared.

According to the embodiment of the present disclosure, because the metal foil is formed between the negative electrode current collector and the negative electrode active material layer, a negative electrode, a solid-state battery and a solid-state battery fabrication method may be provided that may prevent lithium contained in the negative electrode active material layer from alloying with a metal contained in the negative electrode current collector.

### BRIEF DESCRIPTION OF DRAWINGS

Fig. 1 is a sectional diagram of principal portions of a negative electrode that is illustrated as an exemplary embodiment of the present disclosure.
Fig. 2 is a sectional diagram of principal portions of a solid-state battery that is illustrated as an exemplary embodiment of the present disclosure.
Fig. 3 is a sectional diagram of principal portions of a negative electrode that is illustrated as an alternative exemplary embodiment of the present disclosure.
Fig. 4 is a sectional diagram of principal portions of a solid-state battery that is illustrated as an alternative exemplary embodiment of the present disclosure.

### DESCRIPTION OF EMBODIMENTS

In the present disclosure, numerical ranges that are shown using "-" are intended to indicate ranges that include the values written before and after the "n^{on} as, respectively, a minimum value and maximum value.

In numerical ranges written in grades in the present disclosure, the maximum value or minimum value written in one numerical range may be replaced with the maximum value or minimum value of a numerical range describing an alternative grade. In numerical ranges written in the present disclosure, a maximum value or minimum value written in a certain numerical range may be replaced with a value indicated in an Example.

In the present disclosure, provided the intended object of a step is achieved, the meaning of the term "step" is intended to include not just an independent step but also a step that might not be clearly distinguished from another step.

A combination of two or more preferred modes in the present disclosure constitutes a more preferable mode.

In the present disclosure, when plural types of material corresponding to a component are present, unless particularly specified, an amount of the component is intended to indicate a total amount of the plural types of material.

When an exemplary embodiment of the present disclosure is described with reference to drawings, structures of the exemplary embodiment are not limited by the structures illustrated in the drawings. Moreover, sizes of members in the drawings are conceptual and are not intended to limit relative size relationships of the members.

### < Negative electrode and solid-state battery >

In the negative electrode according to the present disclosure, the negative electrode current collector, metal foil and negative electrode active material layer are layered in this order. Because the metal foil is disposed between the negative electrode active material layer and the negative electrode current collector in the negative electrode according to the present disclosure, metal contained in the negative electrode current collector is prevented by the metal foil from alloying with lithium contained in the negative electrode active material layer. In particular, in the negative electrode according to the present disclosure, because the metal foil is provided instead of metal plating between the negative electrode active material layer and negative electrode current collector, the above-mentioned alloying may be prevented more assuredly. The reason for this is that microscopic holes known as pinholes may form in metal plating such as nickel plating or the like. Thus, when metal plating is employed, lithium may pass through the pinholes and form an alloy. Therefore, when the negative electrode according to the present disclosure is employed in a solid-state battery, a deterioration in battery characteristics caused by the above-mentioned alloying may be prevented and excellent battery characteristics may be maintained over long periods.

This metal foil is formed of a metal that does not form an alloy with lithium contained in the negative electrode active material layer. For example, the metal foil is preferably a metal foil of a metal that has an oxidation/reduction potential higher than a potential at the negative electrode. In a solid-state battery that employs the negative electrode according to the present disclosure, because the metal foil is formed of a metal with a higher oxidation/reduction potential than the potential at the negative electrode side of the metal foil, formation of an alloy with lithium contained in the negative electrode active material layer may be prevented. A foil formed of a metal such as nickel, chromium, iron, gold, platinum, silver, stainless steel or the like may be employed as this metal foil. Specifically, employing a nickel foil as the metal foil is preferable.

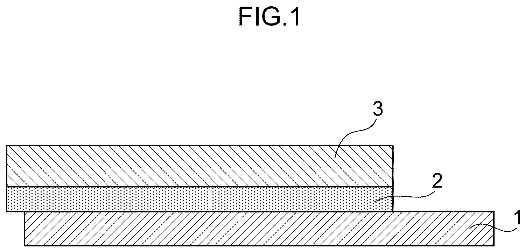

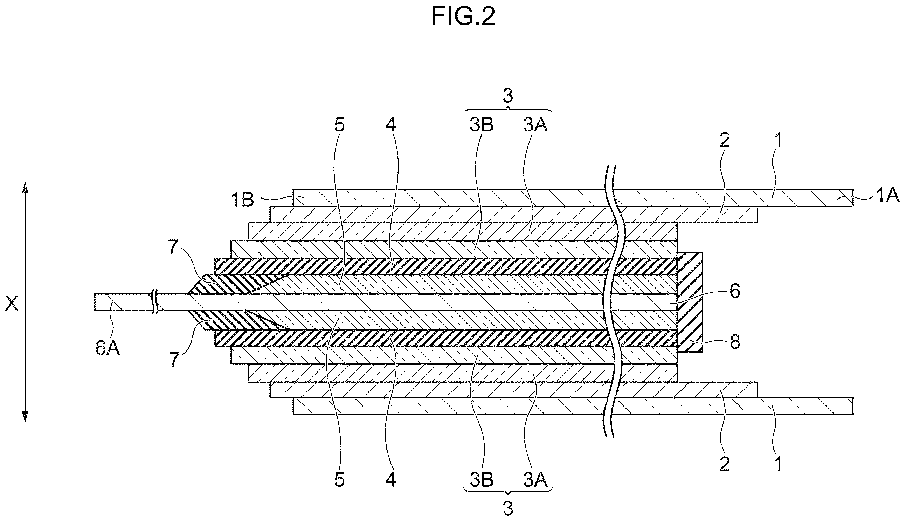

As shown in Fig. 1, a negative electrode that is illustrated as an exemplary embodiment according to the present disclosure includes a negative electrode current collector 1, a metal foil 2 and a negative electrode active material layer 3. As shown in Fig. 2, a solid-state battery equipped with the negative electrode shown in Fig. 1 according to the present exemplary embodiment includes solid-state electrolyte layers 4 and positive electrodes that each include a positive electrode charge collector 6 and a positive electrode active material layer 5. Each solid-state electrolyte layer 4 is disposed in contact with the negative electrode active material layer 3 of the negative electrode. The positive electrode active material layer 5 is disposed to oppose the negative electrode with the solid-state electrolyte layer 4 therebetween. The positive electrode active material layer 5 is disposed on at least one principal surface of the positive electrode charge collector 6. In the solid-state battery shown in Fig. 2, each negative electrode active material layer 3 is provided with a first negative electrode active material layer 3A and a second negative electrode active material layer 3B. However, the negative electrode active material layer 3 may be formed as a single layer, and may be divided into more than two layers.

The positive electrodes of the solid-state battery shown in Fig. 2 are provided with the positive electrode active material layers 5 disposed on both the principal surfaces of the positive electrode charge collector 6. In the solid-state battery shown in Fig. 2, the solid-state electrolyte layer 4 and the negative electrode (the negative electrode current collector 1, metal foil 2 and negative electrode active material layer 3) are respectively layered on each positive electrode active material layer 5. The solid-state battery shown in Fig. 2 is provided with a layered body in which the negative electrode current collector 1 is the outermost layer of each negative electrode. In other words, the solid-state battery shown in Fig. 2 is centered on the positive electrode charge collector 6 in a layering direction (the direction of arrow X in Fig. 2), and the positive electrode active material layer 5, solid-state electrolyte layer 4, negative electrode active material layer 3, metal foil 2 and negative electrode current collector 1 are layered in this order on both of the principal surfaces of the positive electrode charge collector 6. The solid-state battery shown in Fig. 2 further includes insulating layers 7 on the positive electrode charge collector 6, at positions contacting end portions of the positive electrode active material layers 5.

In the solid-state battery shown in Fig. 2, the negative electrode current collector 1 includes a negative electrode current collector tab side end portion 1A, to be connected with a negative electrode current collector tab (which is not shown in the drawings). An end portion 1B of the negative electrode current collector 1, at the opposite side of the negative electrode current collector 1 from the side thereof at which negative electrode current collector tab side end portion 1A is disposed, may be disposed at an inner side relative to an end portion of the metal foil 2. More specifically, the end portion 1B may be set 1 µm-10 µm to the inner side relative to the end portion of the metal foil 2, is preferably set 3 µm-8 µm to the inner side, and is more preferably set 4 µm-6 µm to the inner side. Because the end portion 1B of the negative electrode current collector 1 is disposed at the inner side relative to the end portion of the metal foil 2 in this way, a short circuit between the negative electrode current collector 1 and the positive electrode active material layer 5 or positive electrode charge collector 6 may be assuredly prevented. If metal plating was disposed between the negative electrode current collector 1 and negative electrode active material layer 3 in a solid-state battery instead of the metal foil 2, this metal plating would be formed by a plating process on a principal surface of the negative electrode current collector 1. As a result, the end portion 1B of the negative electrode current collector 1 might not be disposed at the inner side relative to the end portion of the metal plating. That is, when the metal foil 2 is employed in a solid-state battery instead of metal plating, positional relationships between the negative electrode current collector 1 and the metal foil 2 may be freely adjusted.

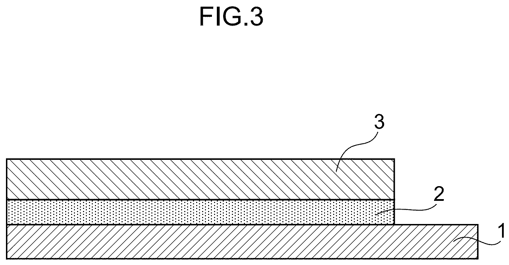

However, the negative electrode and solid-state battery according to the present disclosure are not limited to a structure in which the end portion 1B at the opposite side of the negative electrode current collector 1 from the negative electrode current collector tab side end portion 1A is disposed at the inner side relative to the end portion of the metal foil 2. For example, as illustrated in Fig. 3, the end portion 1B of the negative electrode current collector 1 may be fabricated to overlap in the layering direction with the end portion of the metal foil 2, by the negative electrode active material layer 3 being formed on one principal surface of the metal foil 2, the negative electrode current collector 1 being pasted onto the other principal surface of the metal foil 2, and then the side of the negative electrode current collector 1 at which the end portion 1B is disposed being cut in the layering direction. If metal plating was disposed between the negative electrode current collector 1 and negative electrode active material layer 3 in a solid-state battery instead of the metal foil 2, a film thickness of the metal plating would be thin. Therefore, burrs formed at the cut face of the negative electrode current collector 1 might be in close proximity to the negative electrode active material layer 3 and might form an alloy with the lithium contained in the negative electrode active material layer 3. In the solid-state battery according to the present disclosure, the metal foil 2 that is employed has a greater film thickness than metal plating. Therefore, even if burrs are formed at the cut face of the negative electrode current collector 1, alloying with the lithium contained in the negative electrode active material layer 3 may be prevented.

As shown in Fig. 1 and Fig. 2, the negative electrode and solid-state battery according to the present disclosure do not include an adhesion layer between the metal foil 2 and the negative electrode active material layer 3. That is, in the negative electrode and solid-state battery according to the present disclosure, the metal foil 2 and negative electrode active material layer 3 may be layered without an adhesion layer therebetween. A reason for this is that the metal foil 2 and negative electrode active material layer 3 may be joined by an anchor effect caused by protrusions and indentations formed at the surface of the metal foil 2. If metal plating was employed in a solid-state battery instead of the metal foil 2, an anchor effect on the negative electrode active material layer 3 at the surface of the metal plating might not be expected, and an adhesion layer would be necessary for joining the negative electrode active material layer 3 to the metal plating. As mentioned above, alloying may result from pinholes that form in metal plating; the adhesion layer is also necessary to avoid this alloying. In the negative electrode and solid-state battery according to the present disclosure, because the metal foil 2 is provided, the adhesion layer that is required when metal plating is employed need not be included. In particular, when the solid-state battery according to the present disclosure has a structure that does not include an adhesion layer between the metal foil 2 and negative electrode active material layer 3, a total thickness of the negative electrode active material layer 3, the solid-state electrolyte layer 4 and the positive electrode active material layer 5 may be increased by an amount corresponding to the thickness of an adhesion layer. As a result, battery capacity of the solid-state battery according to the present disclosure may be greater than when an adhesion layer is included.

However, the negative electrode and solid-state battery according to the present disclosure are not limited to structures that do not include an adhesion layer; structures in which an adhesion layer is arranged are also applicable. In these structures, for the adhesion layer to electronically join the metal foil 2 with the negative electrode active material layer 3, a carbon coat layer with conductivity is preferable as the adhesion layer. In the negative electrode and solid-state battery according to the present disclosure, the metal foil 2 and negative electrode active material layer 3 may be more securely joined by providing a carbon coat layer.

In the solid-state battery shown in Fig. 2, the positive electrode charge collector 6 includes a positive electrode current collector tab side end portion 6A to be connected with a positive electrode current collector tab (which is not shown in the drawings). The insulating layer 7 and the positive electrode active material layer 5 are arranged in this order from the positive electrode current collector tab side end portion 6A. The solid-state battery shown in Fig. 2 is provided with an end portion insulation portion 8 at an end portion of the positive electrode charge collector 6 that is at the opposite side thereof from the side at which the positive electrode current collector tab side end portion 6A is disposed. The meaning of the term "layering direction" as used in the present disclosure is intended to include a direction, from the positive electrode charge collector 6, in which the positive electrode active material layer 5, solid-state electrolyte layer 4 and the like are layered as indicated by the arrow X in Fig. 2.

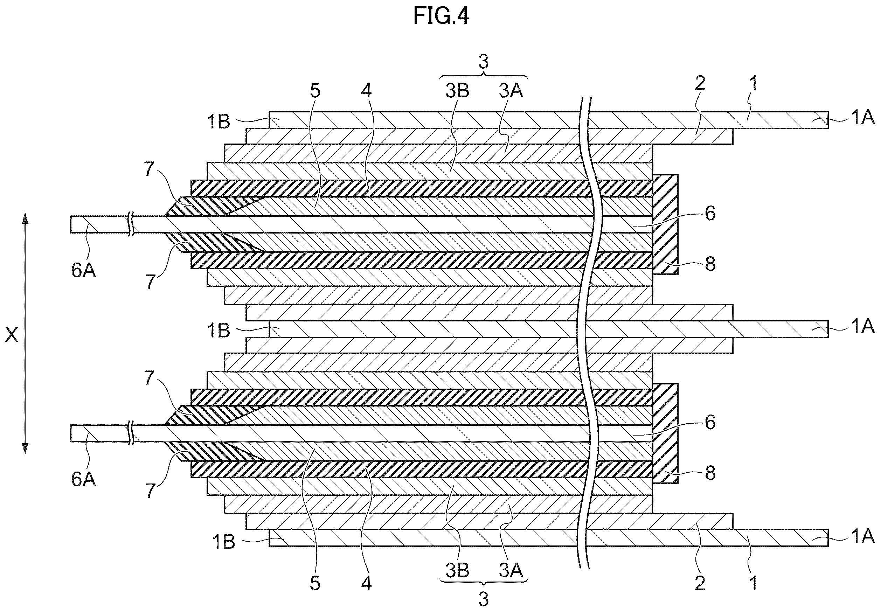

The solid-state battery according to the present disclosure may be provided with a plural number of the solid-state battery layered body shown in Fig. 2. For example, as shown in Fig. 4, a solid-state battery may be illustrated in which a plural number of the layered body shown in Fig. 2 are provided and adjacent layered bodies are layered with one of the negative electrode current collector 1 interposed. The metal foil 2 and negative electrode active material layer 3 of one of the adjacent layered bodies are layered on one principal surface of the negative electrode current collector 1, and the metal foil 2 and negative electrode active material layer 3 of the other of the adjacent layered bodies are layered on the other principal surface of the negative electrode current collector 1. That is, the solid-state battery according to the present disclosure may be structured with the single negative electrode current collector 1 between the adjacent layered bodies. If metal plating was employed in a solid-state battery instead of the metal foil 2, forming metal plating at both principal surfaces of the negative electrode current collector 1 would be difficult. Consequently, a structure with the single negative electrode current collector 1 between adjacent layered bodies might not be formed. Therefore, when the solid-state battery according to the present disclosure includes for example, n of the layered bodies, thickness may be reduced compared to a structure that employs metal plating instead of the metal foils 2 by an amount corresponding to n-1 of the negative electrode current collectors 1. Correspondingly, the negative electrode active material layers 3, solid-state electrolyte layers 4 and positive electrode active material layers 5 may be designed to be thicker by corresponding amounts. As a result, battery capacity of the solid-state battery according to the present disclosure may be greater than when metal plating is formed instead of the metal foils 2.

### < Principal elements of the solid-state battery >

### - Positive electrode current collector -

The positive electrode current collector that is employed may be any common positive electrode current collector for batteries. The positive electrode current collector may have the form of a foil, a plate, a mesh, punched metal, a foam or the like. The positive electrode current collector may be formed of a metal foil or a metal mesh. Specifically, a metal foil has excellent handling characteristics. The positive electrode current collector may be formed of plural sheets of foil. Metals that can be mentioned for forming the positive electrode current collector include copper, nickel, chromium, gold, platinum, silver, aluminium, iron, titanium, zinc, cobalt, stainless steel and so forth. Specifically, with a view to assuring oxidation/reduction resistance and the like, the positive electrode current collector may include aluminium. For purposes of adjusting resistance and the like, the positive electrode current collector may have several coating layers at its surface. The positive electrode current collector may be a body in which the above-mentioned metal is plated or vapor-deposited onto a metal foil or a base material. When the positive electrode active material layer and the like are to be layered on the positive electrode current collector, as shown in Fig. 1, an aluminium foil may be employed as the positive electrode current collector, for example, an aluminium foil with a thickness of 10 µm.

### - Positive electrode active material layer -

The positive electrode active material layer includes at least a positive electrode active material, and may further include, optionally, an electrolyte, a conductive auxiliary agent, a binder and the like. The positive electrode active material layer may additionally include various additives. A publicly known positive electrode active material for rechargeable batteries may be used as the positive electrode active material. The positive electrode active material may be, for example, one or more material selected from various lithium-containing compounds, elemental sulfur and sulfur compounds. A lithium-containing compound serving as the positive electrode active material may be various lithium-containing oxides, such as lithium cobalt oxide, lithium nickel oxide, Li_{1±α}Ni_{1/3}Co_{1/3}Mn_{1/3}O_{2±δ}, lithium manganate, a lithium spinel compound (a heteroelemental substituent Li-Mn spinel or the like with a composition represented by Li_{i+xM}n_{2-x-y}M_{y}O₄ (in which M is one or more selected from aluminium, magnesium, cobalt, iron, nickel and zinc)), lithium titanate, a lithium metal phosphate (LiMPO₄ or the like, in which M is one or more selected from iron, manganese, cobalt and nickel), and the like. Specifically, when the positive electrode active material includes a lithium-containing oxide containing, as constituent elements, oxygen and one or more of lithium, nickel, cobalt and manganese, the positive electrode active material may be expected to provide improved effects. The positive electrode active material may employ just one type of material and may employ a combination of two or more types of material.

A shape of the positive electrode active material may be a common shape of a positive electrode active material for batteries. The positive electrode active material may be, for example, a particulate. The positive electrode active material may be solid, may be hollow, may have vacancies, and may be porous. The positive electrode active material may be primary particles, and may be secondary particles in which plural primary particles are agglomerated. A protective layer containing an ion conductive oxide may be formed on surfaces of the positive electrode active material. Thus, a reaction between the positive electrode active material and a sulfide (for example, a solid-state sulfide electrolyte) or the like is more likely to be suppressed. Ion conductive oxides that can be mentioned include, for example, Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄ and the like.

### - Solid-state electrolyte -

A solid-state electrolyte contained in the solid-state electrolyte layer preferably includes at least one type of solid-state electrolyte selected from the group of solid-state electrolytes including sulfide solid-state electrolytes, oxide solid-state electrolytes and halide solid-state electrolytes.

A sulfide solid-state electrolyte preferably contains sulfur (S) as a principal component of anion elements, and in addition to sulfur, preferably contains, for example, elemental lithium, an element A, and elemental sulfur. Element A is one or more selected from the group consisting of phosphorus, arsenic, antimony, silicon, germanium, tin, boron, aluminium, gallium and indium. The sulfide solid-state electrolyte may also contain one or more of oxygen and halogen elements. Halogen elements (X) that can be mentioned are, for example, fluorine, chlorine, bromine, iodine and the like. A composition of the sulfide solid-state electrolyte is not particularly limited. For example, xLi₂S·(100-x)P₂S₅ (70≤x≤80) and yLiI·zLiBr·(100-y-z) (xLi₂S·(1-x)P₂S₅) (0.7≤x≤0.8, 0≤y≤30, 0≤z≤30) can be mentioned.

A sulfide solid-state electrolyte may have a composition represented by the following general formula (1).

Li₄₋ₓGe₁₋ₓPₓS₄ (0<x<1) (1)

In formula (1), at least some of the germanium may be substituted with one or more selected from the group consisting of antimony, silicon, tin, boron, aluminium, gallium, indium, titanium, zirconium, vanadium and niobium. At least some of the phosphorus may be substituted with one or more selected from the group consisting of antimony, silicon, tin, boron, aluminium, gallium, indium, titanium, zirconium, vanadium and niobium. Some of the lithium may be substituted with one or more selected from the group consisting of sodium, potassium, magnesium, calcium and zinc. Some of the sulfur may be substituted with a halogen. The halogen is at least one of fluorine, chlorine, bromine and iodine.

An oxide solid-state electrolyte preferably contains oxygen (0) as a principal component of anion elements and contains, for example, lithium, an element Q and oxygen (Q represents one or more of niobium, boron, aluminium, silicon, phosphorus, titanium, zirconium, molybdenum, tungsten and sulfur). Oxide solid-state electrolytes that can be mentioned include garnet-type solid-state electrolytes, perovskite-type solid-state electrolytes, NASICON-type solid-state electrolytes, Li-P-O-based solid-state electrolytes, Li-B-O-based solid-state electrolytes and so forth. Garnet-type solid-state electrolytes that can be mentioned include, for example, Li₇La₃Zr₂O₁₂, Li₇-xLa₃(Zr₂₋ₓNbₓ)O₁₂ (0≤x≤2), Li₅La₃Nb₂O₁₂ and the like. Perovskite-type solid-state electrolytes that can be mentioned include, for example, (Li,La)TiO₃, (Li,La)NbO₃, (Li,Sr)(Ta,Zr)O₃ and the like. NASICON-type solid-state electrolytes that can be mentioned include, for example, Li(Al,Ti)(PO₄)₃, Li(Al,Ga)(PO₄)₃ and the like. Li-P-O-based solid-state electrolytes that can be mentioned include, for example, Li₃PO₄ and LiPON (a compound in which some of the oxygen in Li₃PO₄ is substituted with nitrogen), and Li-B-O-based solid-state electrolytes that can be mentioned include, for example, Li₃BO₃ and a compound in which some of the oxygen in Li₃BO₃ is substituted with carbon.

As a halide solid-state electrolyte, a solid-state electrolyte containing lithium, M and X (M represents one or more of titanium, aluminium and yttrium, and X represents fluorine, chlorine or bromine) is excellent. More specifically, Li_{6-3z}Y_{z}X₆ (X represents chlorine or bromine, and z satisfies the conditions 0<z<2) and Li_{6-(4-x)b}(Ti₁₋ₓAlₓ)_{b}F₆ (0<x<1, 0<b≤1.5) are preferable. Of Li_{6-3z}Y_{z}X₆, Li₃YX₆ (X represents chlorine or bromine) is more preferable with regard to lithium ion conductivity, and Li₃YCl₆ is even more preferable. Li_{6-(4-x)b}(Ti₁₋ₓAl_{x)b}F₆ (0<x<1, 0<b≤1.5) is preferably included together with, for example, a solid-state electrolyte such as a sulfide solid-state electrolyte with a view to suppressing oxidative decomposition or the like of the sulfide solid-state electrolyte.

### - Solid-state electrolyte layer -

Solid-state electrolyte layers that can be mentioned include electrolyte layers that are employed in semi-solid-state batteries and in all-solid-state batteries. A thickness of the solid-state electrolyte layer is not particularly limited and may be, for example, selected from a range of 1 µm-30 µm. A type of solid-state electrolyte contained in the solid-state electrolyte layer is not particularly limited. For example, a solid-state electrolyte may be selected and employed from the solid-state electrolytes that may be contained in the positive electrode active material layer described above. The solid-state electrolyte layer may be a single layer and may have a multi-layer structure with two or more layers.

When the solid-state battery according to the present disclosure contains a solid-state electrolyte, a liquid electrolyte may be included with the solid-state electrolyte, up to 10% by mass relative to a total electrolyte mass. When the battery according to the present disclosure contains a solid-state electrolyte, the solid-state electrolyte may be a compound solid-state electrolyte that contains an inorganic solid-state electrolyte and a polymer electrolyte. When the solid-state battery according to the present disclosure includes a liquid electrolyte as an electrolyte, the type of liquid electrolyte is not particularly limited; a publicly known liquid electrolyte may be employed. As a specific liquid electrolyte, a solution in which a lithium salt such as LiPF6, LiFSi or the like is dissolved in an organic solvent can be mentioned.

### - Negative electrode active material layer -

The negative electrode active material layer includes at least a negative electrode active material, and may further include, optionally, an electrolyte, a conductive auxiliary agent, a binder and the like. The negative electrode active material layer may additionally include various additives. Negative electrode active materials that can be mentioned include carbon materials, active materials containing elemental silicon, metallic lithium, alloys containing lithium, metals and alloys that may alloy with lithium, oxides, transition metal nitrides and so forth. Carbon materials that can be mentioned include graphite materials, non-crystalline carbon materials, carbon black, activated carbon and the like. Graphite materials that can be mentioned include natural graphite and synthetic graphite. Non-crystalline carbon materials that can be mentioned include hard carbon, soft carbon, coke, mesocarbon microbeads (MCMB), mesophase pitch carbon fibers (MCF) and the like. A graphite material may be covered with a metal or non-crystalline carbon. Active materials containing elemental silicon that can be mentioned include simple silicon, silicon alloys (for example an alloy of silicon with at least one metal selected from the group consisting of tin, titanium, iron, nickel, copper, cobalt, aluminium and the like), porous silicon, silicon clathrate compounds, silicon oxides and the like.

### - Negative electrode current collector -

The negative electrode current collector that is employed may be any common negative electrode current collector for batteries. The negative electrode current collector may have the form of a foil, a plate, a mesh, punched metal, a foam or the like. The negative electrode current collector may be a metal foil or a metal mesh, or may be a carbon sheet. The negative electrode current collector may be formed of plural foils, sheets or the like. Metals that can be mentioned for forming the negative electrode current collector include copper, nickel, chromium, gold, platinum, silver, aluminium, iron, titanium, zinc, cobalt, stainless steel and so forth. Specifically, with a view to assuring oxidation/reduction resistance and inhibiting alloy formation with lithium, the negative electrode current collector may include at least one metal selected from copper, nickel and stainless steel.

### - Metal foil -

As mentioned above, the metal foil is preferably a foil of a metal with an oxidation/reduction potential higher than a potential at the negative side of the solid-state battery. For example, a metal foil such as a nickel foil, a chromium foil, an iron foil, a gold foil, a platinum foil, a silver foil, a stainless steel foil or the like may be employed. For purposes of adjusting resistance and the like, the metal foil may have several coating layers at its surface. The metal foil may be a body in which a metal is plated or vapor-deposited. The metal foil may be a single foil and may be plural metal foils. Other layers may be included between the plural metal foils. Thickness of the metal foil is not particularly limited but may be, for example, 0.1 µm-10 µm, is preferably 0.3 µm-5 µm, and is more preferably 0.5 µm-2 µm. When the thickness of the metal foil is in these ranges, alloying between the negative electrode current collector and the negative electrode active material layer of lithium contained in the negative electrode active material layer may be prevented reliably, while a reduction in battery capacity due to the thickness of the metal foil may be prevented.

### - Carbon coat layer -

As mentioned above, a carbon coat layer is an optional layer that may be disposed between the metal foil and the negative electrode active material layer. When the carbon coat layer is disposed between the metal foil and the negative electrode active material layer, the carbon coat layer functions as an adhesion layer for joining the negative electrode current collector to the negative electrode active material layer, and functions as a conduction layer for assuring electrical conduction between the negative electrode current collector and the negative electrode active material layer. Carbon materials contained in the carbon coat layer that can be mentioned include graphite materials, non-crystalline carbon materials, carbon black, activated carbon and the like. Graphite materials that can be mentioned include natural graphite and synthetic graphite. Non-crystalline carbon materials that can be mentioned include hard carbon, soft carbon, coke, mesocarbon microbeads (MCMB), mesophase pitch carbon fibers (MCF) and the like.

### - Exterior body -

The solid-state battery according to the present disclosure may be further provided with an exterior body. The exterior body accommodates at least the electrode layered body described above. Exterior bodies that can be mentioned include laminate-type exterior bodies, case-type exterior bodies and the like. A laminate-type exterior body may be formed of a layered body (a laminate film) including a metal layer that contains a metal such as aluminium or the like and a heat sealing layer that contains a resin that is fused by heating.

### - Constraining member -

The solid-state battery according to the present disclosure may be further provided with a constraining member. The constraining member applies a constraining force in the thickness direction to the electrode layered body described above. The constraining pressure applied in the thickness direction of the electrode layered body may be, for example, more than 0.1 MPa, more than 1 MPa, or more than 5 MPa. The constraining force applied in the thickness direction of the electrode layered body may be, for example, less than 100 MPa, less than 50 MPa, or less than 20 MPa.

### < Solid-state battery fabrication method >

The solid-state battery fabrication method according to the present disclosure is a fabrication method for a solid-state battery that includes a negative electrode including a negative electrode active material layer, a positive electrode including a positive electrode active material layer, and a solid-state electrolyte layer disposed between the negative electrode and the positive electrode. The solid-state battery fabrication method includes a step of making the negative electrode according to the present disclosure as described above by stacking a negative electrode current collector with a metal foil. In the solid-state battery fabrication method according to the present disclosure, the negative electrode active material layer may be formed in advance at a surface of the metal foil that is at the opposite side thereof from the surface that is to be stacked with the negative electrode current collector. Alternatively, the metal foil and the negative electrode current collector may be stacked and integrated, after which the negative electrode active material layer may be formed at the surface of the metal foil at the opposite side thereof from the surface stacked with the negative electrode current collector. In the solid-state battery according to the present disclosure, as described above, the negative electrode described above may be fabricated by stacking the negative electrode current collector with the metal foil without an adhesion layer being formed.

When the solid-state battery fabrication method according to the present disclosure is employed as a method of fabricating the solid-state battery depicted in Fig. 1 and Fig. 2, when the negative electrode current collector 1 and the metal foil 2 are stacked, the end portion 1B at the opposite side of the negative electrode current collector 1 from the side at which the negative electrode current collector tab side end portion 1A that connects with a negative electrode current collector tab is disposed is positioned at the inner side relative to the end portion of the metal foil 2. Therefore, as illustrated in Fig. 1 and Fig. 2, a solid-state battery may be fabricated that reliably prevents short circuits between the negative electrode current collector 1 and the positive electrode active material layer 5 or positive electrode charge collector 6. Alternatively, in the solid-state battery fabrication method according to the present disclosure, when the end portion 1B at the opposite side of the negative electrode current collector 1 from the negative electrode current collector tab side end portion 1A that connects with a negative electrode current collector tab is cut in the layering direction together with an end portion of the metal foil 2, the negative electrode as illustrated in Fig. 3 may be fabricated.

In the solid-state battery fabrication method according to the present disclosure, the negative electrode active material layer 3 may be formed by applying a negative electrode slurry containing a negative electrode active material to the surface of the metal foil 2 that is at the opposite side thereof from the surface that is stacked with the negative electrode current collector 1.

### < Battery types and applications >

A type of the solid-state battery is not particularly limited, but a lithium-ion battery is typical. The solid-state battery according to the present disclosure may be a non-rechargeable battery and may be a rechargeable battery. Of these, a rechargeable battery is preferable, because the solid-state battery may be repeatedly charged and discharged and is useful as, for example, a vehicle-mounted battery. The solid-state battery may be a semi-solid-state battery, which includes a gel layer containing a liquid electrolyte and a polymer between an electrode and a solid-state electrolyte, or the like. The solid-state battery may be an all-solid-state battery that employs a solid-state electrolyte as the electrolyte. The solid-state electrolyte may contain an electrolyte liquid up to 10% by mass of the total electrolyte mass. An all-solid-state battery is preferable as the solid-state battery.

Applications of the battery according to the present disclosure are not particularly limited. Typical applications that can be mentioned include power sources for vehicles, electric equipment and electricity storage systems. The battery may be employed as a power source for a moving body other than a vehicle (for example, for rail, marine or aviation equipment), and may be employed as a power source for electrical components of information processing equipment and the like. Among these applications of the battery according to the present disclosure, application as a power source for a vehicle is preferable, and application as a drive power source for a hybrid car, a plug-in hybrid car or an electric car is preferable.

Vehicles that can be mentioned include electric four-wheel vehicles, electric two-wheel vehicles, gasoline cars, diesel cars and the like. Electric four-wheel vehicles that can be mentioned include, for example, electric cars (BEV), plug-in hybrid cars (PHEV), hybrid cars (HEV) and the like. Electric two-wheel vehicles that can be mentioned include, for example, electric motorbikes, electric assisted bicycles and the like.

## Claims

1. A negative electrode comprising:
a negative electrode current collector (1);
a metal foil (2); and
a negative electrode active material layer (3),
wherein the negative electrode current collector (1), the metal foil (2) and the negative electrode active material layer (3) are layered in this order.

2. The negative electrode according to claim 1, wherein the metal foil (2) is a foil of a metal having an oxidation/reduction potential that is higher than a potential at the negative electrode.

3. The negative electrode according to claim 1 or 2, wherein the metal foil (2) is a nickel foil.

4. The negative electrode according to any one of claims 1 to 3, wherein:
the negative electrode current collector (1) comprises a negative electrode current collector tab side end portion to be connected with a negative electrode current collector tab, and
an end portion of the negative electrode current collector (1), is at an opposite side from the negative electrode current collector tab side end portion of the negative electrode current collector, is disposed at an inner side relative to an end portion of the metal foil (2).

5. The negative electrode according to any one of claims 1 to 4, wherein the metal foil (2) is layered on the negative electrode active material layer (3) without an adhesion layer therebetween.

6. A solid-state battery comprising:
the negative electrode according to any one of claims 1 to 5;
a solid-state electrolyte layer (4) disposed contacting the negative electrode active material layer (3) of the negative electrode; and
a positive electrode disposed opposing the negative electrode via the solid-state electrolyte layer (4), and comprising a positive electrode current collector (6) and a positive electrode active material layer (5) disposed on at least one principal surface of the positive electrode current collector (6).

7. The solid-state battery according to claim 6, wherein the positive electrode is provided with the positive electrode active material layer (5) disposed on both of the principal surfaces of the positive electrode current collector (6), and
wherein a layered body is provided in which the solid-state electrolyte layer (4) and the negative electrode are respectively layered on each of the positive electrode active material layers (5), and the negative electrode current collectors (1) of the negative electrodes are outermost layers.

8. The solid-state battery according to claim 7, wherein a plurality of the layered body are provided, and adjacent the layered bodies are layered with one of the negative electrode current collectors (1) therebetween,
one of the adjacent layered bodies including one of the negative electrodes, in which the metal foil (2) and negative electrode active material layer (3) are layered on one principal surface of the negative electrode current collector (1), and
the other of the adjacent layered bodies including another of the negative electrodes, in which the metal foil (2) and negative electrode active material layer (3) are layered on another principal surface of the negative electrode current collector (1).

9. A method for producing a solid-state battery comprising a negative electrode comprising a negative electrode active material layer (3), a positive electrode comprising a positive electrode active material layer (5), and a solid-state electrolyte layer (4) disposed between the negative electrode and the positive electrode,
the method comprising preparing the negative electrode according to any one of claims 1 to 3 by stacking the negative electrode current collector (1) with the metal foil (2).

10. The method for producing a solid-state battery according to claim 9, wherein the negative electrode current collector (1) and the metal foil (2) are stacked so that an end portion of the negative electrode current collector (1), which is at an opposite side from a negative electrode current collector tab side end portion to be connected with a negative electrode current collector tab, is disposed at an inner side relative to an end portion of the metal foil (2).

11. The method for producing a solid-state battery according to claim 9 or 10, further comprising cutting an end portion of the negative electrode current collector (1), which is at the opposite side from the negative electrode current collector tab side end portion to be connected with a negative electrode current collector (1), and an end portion of the metal foil (2) in a layering direction after the stacking the negative electrode current collector (1) with the metal foil (2).

12. The method for producing a solid-state battery according to any one of claims 9 to 11, further comprising applying a negative electrode slurry comprising a negative electrode active material to a surface at an opposite side of the metal foil (2) from a surface thereof that is stacked with the negative electrode current collector (1).

13. The method for producing a solid-state battery according to any one of claims 9 to 12, wherein, by stacking the metal foil (2) respectively on both of principal surfaces of the negative electrode current collector (1), the negative electrode, comprising the metal foil (2) and the negative electrode active material layer (3) in this order on both the principal surfaces of a single one of the negative electrode current collectors (1), is prepared.
